# EUROPEAN PATENT APPLICATION

(11) **EP 4 585 447 A1**
(43) Date of publication of application: **16.07.2025**
(21) Application number: 25150431.2
(22) Date of filing: 07.01.2025
(51) Int. Cl.: B60L 3/00, B60K 28/14, B60W 30/08, B60W 50/16

(54) **BATTERY ELECTRIC VEHICLE**

(30) Priority: 10.01.2024 JP 2024002126
(71) Applicant: TOYOTA JIDOSHA KABUSHIKI KAISHA, Aichi-ken, 471-8571 (JP)
(72) Inventor: HARA, Yoshikazu, Toyota-shi, 471-8571 (JP)
(74) Representative: TBK

(57) **Abstract**

A battery electric vehicle (100) includes: a pseudo shifting operation member (24, 25, 26) imitating an operation member that is used to perform a shifting operation of a manual transmission internal combustion engine vehicle; a control device (101) configured to control the battery electric vehicle (100); and a perception sensor (17) configured to detect an object approaching the battery electric vehicle (100). The control device (101) is configured to: execute, according to selection by a driver, a control mode in which an operation of the pseudo shifting operation member (24, 25, 26) is associated with torque of the electric motor (4F, 4R); and in a case where the object approaching the battery electric vehicle (100) is detected, give notification to the driver by vibrating any member provided in a cabin of the battery electric vehicle (100). The notification that is given to the driver during execution of the control mode includes notifying the driver by vibrating the pseudo shifting operation member (24, 25, 26).

## Description

### BACKGROUND OF THE INVENTION

### 1. Field of the Invention

The present disclosure relates to battery electric vehicles including an electric motor as a driving source.

### 2. Description of Related Art

Japanese Patent No. 06787507 discloses a battery electric vehicle that can simulate manual shifting operations of a manual transmission internal combustion engine vehicle (manual transmission vehicle).

US Unexamined Patent Application Publication No. 2022/0203891 discloses a method for generating vibration to notify a driver of a battery electric vehicle of a dangerous vehicle situation. The battery electric vehicle is equipped with a vibration actuator embedded in a seat. When a dangerous situation is detected, the seat is vibrated to notify the driver.

### SUMMARY OF THE INVENTION

If there is an object approaching a motor vehicle while its driver is driving, and the driver does not notice the approach of the object or is late in noticing it, there is a risk of collision with the object. One known way to avoid such a collision is to notify the driver when an object approaching the vehicle is detected. One of such notification methods is notification by vibration. For example, in the above US Unexamined Patent Application Publication No. 2022/0203891, the seat is vibrated to notify the driver. However, when vibration is applied to the seat, the driver may be unable to distinguish whether it is the vibration applied to notify him or her of a danger or the vibration generated by an uneven road surface, which could result in a delay in noticing the notification. As described above, when notification is given by vibration, the driver may not easily notice the notification depending on the member to be vibrated. Selection of the member to be vibrated is important for appropriate notification.

One aspect of the present disclosure provides a battery electric vehicle that includes an electric motor as a driving source. The battery electric vehicle includes: a driving operation member that is used to drive the battery electric vehicle; a pseudo shifting operation member imitating an operation member that is used to perform a shifting operation of a manual transmission internal combustion engine vehicle; a control device configured to control the battery electric vehicle according to an operation of the driving operation member; and a perception sensor configured to detect an object approaching the battery electric vehicle. The control device is configured to: detect the object approaching the battery electric vehicle via the perception sensor; execute, according to selection by a driver, a control mode in which an operation of the pseudo shifting operation member is associated with torque of the electric motor; and when the object approaching the battery electric vehicle is detected, give notification to the driver by vibrating any member provided in a cabin of the battery electric vehicle. The notification that is given to the driver during execution of the control mode includes notifying the driver by vibrating the pseudo shifting operation member.

The control device may give the notification to the driver by vibrating an interior member that is used for interior of the battery electric vehicle, in addition to or instead of vibrating the pseudo shifting operation member.

According to another aspect of the present disclosure, the notification that is given to the driver during the execution of the control mode includes notifying the driver by vibrating the interior member.

According to the battery electric vehicle of the present disclosure, notification is given to the driver by vibrating at least one of the pseudo shifting operation member and the interior member. Since the driver touches the pseudo shifting operation member with his or her hand or foot that is relatively sensitive, the driver can easily notice the notification given by the vibration of the pseudo shifting operation member. Since the interior member vibrates with a large amplitude, the driver can easily visually see the interior member vibrating, so that the driver can easily notice the notification given by the vibration. As described above, since at least one of the pseudo shifting operation member and the interior member is vibrated to notify the driver, the driver can easily notice the notification. Notification can thus be effectively given to the driver.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 shows an example of the configuration of a battery electric vehicle according to an embodiment of the present disclosure;
FIG. 2 is a tree diagram showing an example of control modes of the battery electric vehicle that are selectable by a control device;
FIG. 3 shows an example of the configuration of the control device related to driving control of the battery electric vehicle;
FIG. 4 shows an example of the configuration of the control device related to notification to a driver;
FIG. 5 is a flowchart showing an example of a process related to notification to the driver; and
FIG. 6 is a flowchart showing another example of the process related to notification to the driver.

### DETAILED DESCRIPTION OF EMBODIMENTS

Embodiments of the present disclosure will be described below with reference to the accompanying drawings.

### 1. Configuration of Power System of Battery Electric Vehicle

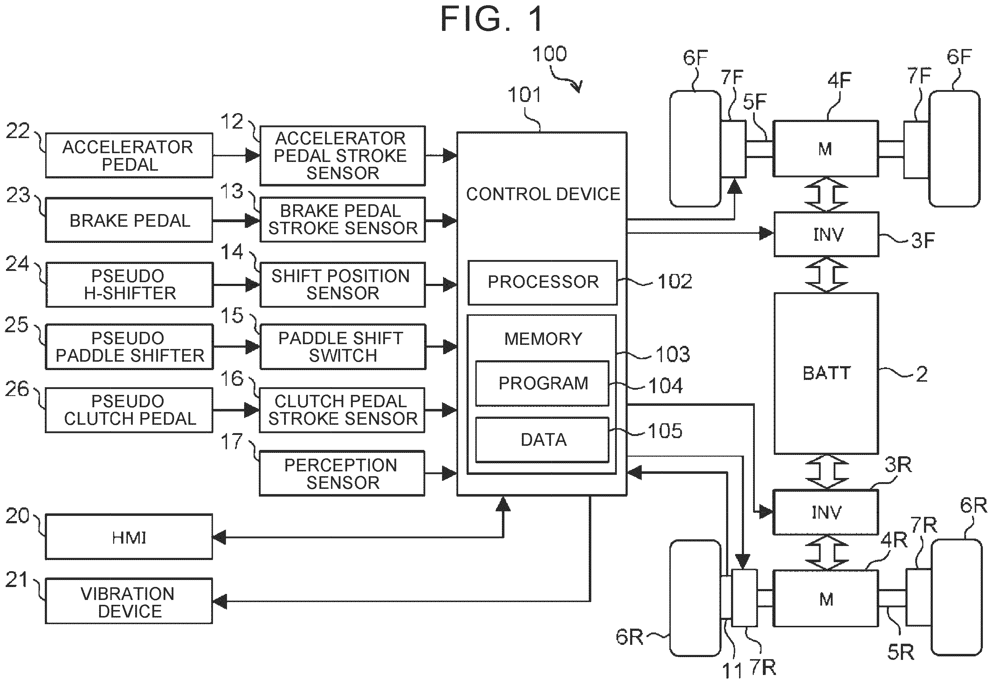

FIG. 1 schematically shows the configuration of a battery electric vehicle 100 according to an embodiment of the present disclosure. First, the configuration of a power system of the battery electric vehicle 100 will be described with reference to FIG. 1.

The battery electric vehicle 100 includes two electric motors (M) 4F, 4R at the front and rear as traction power sources. The electric motors 4F, 4R are, for example, three-phase alternating current (AC) motors. The front electric motor 4F is connected to a front drive shaft 5F that drives front wheels 6F. The rear electric motor 4R is connected to a rear drive shaft 5R that drives rear wheels 6R. The front wheels 6F are suspended on electronically controlled right and left front suspensions 7F that are independent of each other. The rear wheels 6R are suspended on electronically controlled right and left rear suspensions 7R that are independent of each other.

The front electric motor 4F and the rear electric motor 4R are equipped with inverters (INVs) 3F, 3R, respectively. The front inverter 3F and the rear inverter 3R are each connected to a battery (BATT) 2. The battery 2 stores electrical energy for driving the electric motors 4F, 4R. That is, the battery electric vehicle 100 is a battery electric vehicle (BEV) that runs on the electrical energy stored in the battery 2. The inverters 3F, 3R are, for example, voltage inverters, and control the torque of the electric motors 4F, 4R, respectively, by pulse width modulation (PWM) control.

### 2. Configuration of Control System of Battery Electric Vehicle

Next, the configuration of a control system of the battery electric vehicle 100 will be described with reference to FIG. 1.

The battery electric vehicle 100 includes a vehicle speed sensor 11. At least one of wheel speed sensors, not shown, mounted on the right and left front wheels 6F and the right and left rear wheels 6R is used as the vehicle speed sensor 11. The battery electric vehicle 100 also includes an accelerator pedal stroke sensor 12. The accelerator pedal stroke sensor 12 is provided for an accelerator pedal 22, and outputs a signal indicating the amount of depression of the accelerator pedal 22, i.e., the accelerator operation amount. The battery electric vehicle 100 further includes a brake pedal stroke sensor 13. The brake pedal stroke sensor 13 is provided for a brake pedal 23, and outputs a signal indicating the amount of depression of the brake pedal 23, that is, the brake operation amount.

The accelerator pedal 22, the brake pedal 23, and a steering wheel, not shown, are driving operation members that are used to drive the battery electric vehicle 100. In addition to these driving operation members, the battery electric vehicle 100 includes pseudo shifting operation members imitating operation members that are used to perform shifting operations of a manual transmission internal combustion engine vehicle. The pseudo shifting operation members include a pseudo H-shifter 24, a pseudo paddle shifter (pseudo sequential shifter) 25, and a pseudo clutch pedal 26, which will be described below.

The pseudo H-shifter 24 is a dummy different from a real H-shifter. The pseudo H-shifter 24 has a structure imitating a shift stick provided on a console, and is movable between shift positions along an H-pattern gate. However, since the battery electric vehicle 100 does not have an actual transmission, the shift positions of the pseudo H-shifter 24 are virtual shift positions. The pseudo H-shifter 24 is provided with a shift position sensor 14. The shift position sensor 14 outputs a signal indicating the shift position selected by the pseudo H-shifter 24.

The pseudo paddle shifter 25 is a dummy different from a real paddle shifter that is a type of sequential shifter. The pseudo paddle shifter 25 has a structure imitating shift paddles attached to the steering wheel, and includes right and left paddles that can be moved independently of each other. The pseudo paddle shifter 25 is provided with a paddle shift switch 15. The paddle shift switch 15 outputs an upshift signal when the right paddle is pulled, and outputs a downshift signal when the left paddle is pulled.

The pseudo clutch pedal 26 is a dummy different from a real clutch pedal. The pseudo clutch pedal 26 has a structure imitating a clutch pedal of a conventional manual transmission internal combustion engine vehicle. For example, the pseudo clutch pedal 26 includes a reaction force mechanism that generates a reaction force in response to depression of the pseudo clutch pedal 26 by a driver. A start position of the pseudo clutch pedal 26 is a position when no depressing force is applied to the pseudo clutch pedal 26, and an end position of the pseudo clutch pedal 26 is a position when the pseudo clutch pedal 26 is depressed all the way down. The driver can operate the pseudo clutch pedal 26 from the start position to the end position against the reaction force from the reaction force mechanism. The pseudo clutch pedal 26 is provided with a clutch pedal stroke sensor 16. The clutch pedal stroke sensor 16 outputs a signal indicating the amount of depression of the pseudo clutch pedal 26. Since the battery electric vehicle 100 does not have an actual clutch, the amount of operation of the pseudo clutch pedal 26, that is, the clutch operation amount, is a virtual clutch operation amount.

Although the pseudo clutch pedal 26 is a pedal-type operation device that is operated by foot, a lever-type or dial-type operation device that is operated by hand may be provided as a pseudo clutch operation device. The driver can operate the pseudo clutch operation device from its start position to its end position against the reaction force. The pseudo clutch operation device may have various structures as long as the driver can experience an operation feel like a clutch pedal of a conventional manual transmission internal combustion engine vehicle with his or her foot or hand.

The battery electric vehicle 100 also includes a perception sensor 17 that perceives the surroundings. The perception sensor 17 can detect an object approaching the battery electric vehicle 100 by perceiving the surroundings of the battery electric vehicle 100. The perception sensor 17 is, for example, a clearance sonar. Alternatively, the perception sensor 17 may be a camera, a laser imaging and ranging (LIDAR) sensor, or a radar.

The battery electric vehicle 100 further includes a human-machine interface (HMI) 20 as an interface with the driver. The HMI 20 includes a touch panel display. The HMI 20 displays information on the touch panel display, and receives inputs from the driver through touch operations on the touch panel display.

The battery electric vehicle 100 further includes a vibration device 21. The vibration device 21 is mounted in any member provided in a cabin of the battery electric vehicle 100, and can notify the driver by vibrating this member. Notification to the driver by the vibration device 21 will be described later.

The battery electric vehicle 100 may further include an in-vehicle speaker, not shown. The in-vehicle speaker can provide information to the driver by voice, and can also output a pseudo engine sound that simulates an engine sound of a manual transmission internal combustion engine vehicle.

The battery electric vehicle 100 includes a control device 101. Sensors and devices to be controlled that are mounted on the battery electric vehicle 100 are connected to the control device 101 via an in-vehicle network. In addition to the vehicle speed sensor 11, the accelerator pedal stroke sensor 12, the brake pedal stroke sensor 13, the shift position sensor 14, the paddle shift switch 15, the clutch pedal stroke sensor 16, and the perception sensor 17, various other sensors are mounted on the battery electric vehicle 100.

The control device 101 is typically an electronic control unit (ECU). The control device 101 may be a combination of a plurality of ECUs. The control device 101 includes at least a processor 102 and a memory 103. The memory 103 includes a random access memory (RAM) for temporarily recording data and a read-only memory (ROM) for storing a program 104 that is executable by the processor 102 and various types of data 105 related to the program. The program 104 is composed of a plurality of instructions. The processor 102 reads the program 104 and the data 105 from the memory 103, executes the program 104, and generates control signals based on signals acquired from the sensors. The control device 101 may include one processor 102, or may include a plurality of processors 102.

The control device 101 can control the battery electric vehicle 100 in various control modes. The driver can select a control mode himself or herself by performing a touch operation on the touch panel display of the HMI 20. Specifically, when a touch operation is performed on the touch panel display of the HMI 20, one or more programs 104 associated with that touch operation are read from the memory 103 and executed by the processor 102. The control modes of the battery electric vehicle 100 by the control device 101 that are selectable by the driver through an operation on the HMI 20 will be described below.

### 3. Control Modes of Battery Electric Vehicle

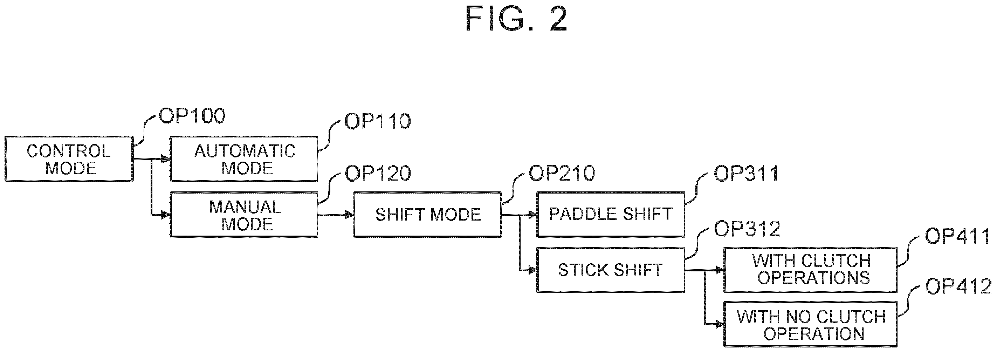

FIG. 2 is a tree diagram showing an example of the control modes of the battery electric vehicle 100 that are selectable by the control device 101. A selection screen is displayed on the touch panel display of the HMI 20 according to the control tree shown in FIG. 2.

The control modes that are selectable via the HMI 20 include an automatic mode and a manual mode. An option "control mode" OP100 is displayed on the initial screen of the HMI 20. When the option "control mode" OP100 is selected, options "automatic mode" OP110 and "manual mode" OP120 are displayed on the touch panel display. When the option "automatic mode" OP110 is selected, the control mode of the battery electric vehicle 100 is switched to the automatic mode. The automatic mode is a control mode in which the battery electric vehicle 100 is driven as a normal BEV. In the automatic mode, the driver can basically drive the battery electric vehicle 100 only by operating the accelerator pedal 22, the brake pedal 23, and the steering wheel, not shown. In the automatic mode, shift operations of the pseudo H-shifter 24, shift operations of the pseudo paddle shifter 25, and clutch operations of the pseudo clutch pedal 26 are disabled.

When the option "manual mode" OP120 is selected, the control mode of the battery electric vehicle 100 is switched to the manual mode. The manual mode is a control mode in which the battery electric vehicle 100 is operated like a manual transmission internal combustion engine vehicle. When the option "manual mode" OP120 is selected, an option "shift mode" OP210 is displayed on the touch panel display.

The option "shift mode" OP210 is an option to select a shift mode of a manual transmission when the battery electric vehicle 100 is to be operated like a manual transmission internal combustion engine vehicle. As shown in FIG. 2, when the option "shift mode" OP210 is selected, options "paddle shift" OP311 and "stick shift" OP312 are displayed on the touch panel display. When the option "paddle shift" OP311 is selected, the shift mode of the manual transmission to be replicated by the battery electric vehicle 100 is switched to a paddle shift mode. The paddle shift mode is a mode in which the pseudo paddle shifter 25 is used for shift operations. In the paddle shift mode, shift operations of the pseudo H-shifter 24 are disabled. In the paddle shift mode, the operation when the gear ratio of the manual transmission is changed is replicated by a shift operation of the pseudo paddle shifter 25. Clutch operations in a real paddle-shift manual transmission are automatically performed by a robot. Therefore, no clutch operations of the pseudo clutch pedal 26 are required in the paddle shift mode. In the paddle shift mode, clutch operations of the pseudo clutch pedal 26 are disabled.

When the option "stick shift" OP312 is selected, a stick shift mode is selected. The stick shift mode is a mode in which the pseudo H-shifter 24 is used for shift operations. In the stick shift mode, shift operations of the pseudo paddle shifter 25 are disabled. In the stick shift mode, the operation when the gear ratio of the manual transmission is changed is replicated by a shift operation of the pseudo H-shifter 24. Some real H-shifter manual transmissions allow the driver to perform clutch operations while others leave clutch operations to a robot. When the option "stick shift" OP312 is selected, options "with clutch operations" OP411 and "with no clutch operation" OP412 are displayed on the touch panel display. When the option "with clutch operations" OP411 is selected, the stick shift mode is switched to a mode that requires clutch operations of the pseudo clutch pedal 26. On the other hand, when the option "with no clutch operation" OP412 is selected, clutch operations of the pseudo clutch pedal 26 are disabled, and the stick shift mode is switched to a mode that does not require clutch operations of the pseudo clutch pedal 26.

The control modes that are selectable by the driver may further include control modes related to engine characteristics, drive modes, etc. For example, the driver may be able to select characteristics of an internal combustion engine when the battery electric vehicle 100 is to be operated like a manual transmission internal combustion engine vehicle. Alternatively, the driver may be able to select four-wheel drive or rear-wheel drive as a drive mode.

The driver can switch the control mode of the battery electric vehicle 100 to his or her preference by operating the touch panel display of the HMI 20 according to such a control tree. The control mode switched by the driver relates to driving control of the battery electric vehicle 100. The driving control of the battery electric vehicle 100 by the control device 101 will be described in the following section.

### 4. Driving Control of Battery Electric Vehicle

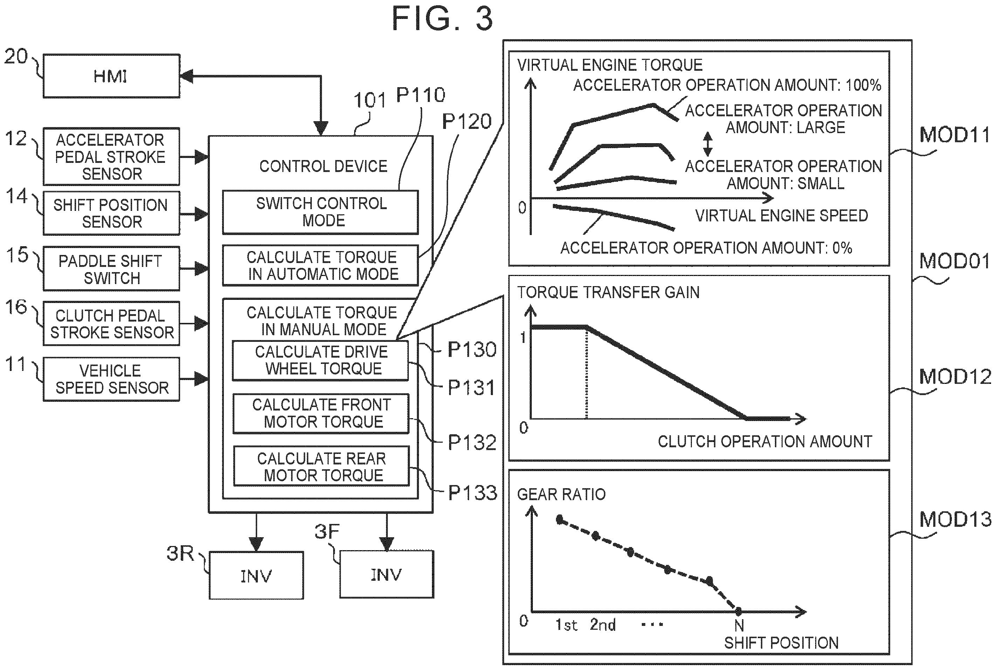

FIG. 3 shows the configuration of the control device 101 related to the driving control of the battery electric vehicle 100. Specifically, FIG. 3 shows a configuration related particularly to torque control out of the driving control. The processor 102 functions as a driving control device when the processor 102 executes one or more driving control programs 104 stored in the memory 103.

A control mode signal is input from the HMI 20 to the control device 101 that functions as a driving control device. The control mode signal includes information on the control mode selected by the driver. The control device 101 performs a process P110 based on the control mode signal. In the process P110, the control mode is switched according to the control mode signal. Switching of the control mode that particularly affects the driving control is switching between the automatic mode and the manual mode.

When the control mode is switched to the automatic mode, the control device 101 performs a process P120 of calculating torque in the automatic mode. In the process P120, the control device 101 acquires a vehicle speed from a signal from the vehicle speed sensor 11, and acquires an accelerator operation amount from a signal from the accelerator pedal stroke sensor 12. The control device 101 has a motor torque map that uses an accelerator operation amount and a vehicle speed as parameters. The control device 101 inputs the acquired vehicle speed and accelerator operation amount to the motor torque map, and controls the inverters 3F, 3R so as to cause the electric motors 4F, 4R to generate the torque obtained from the motor torque map.

When the control mode is switched to the manual mode, the control device 101 performs a process P130 of calculating torque in the manual mode. The process P130 includes a process P131 of calculating torque to be generated by drive wheels. The process P130 also includes a process P132 and a process P133. The process P132 is a process of calculating torque to be generated by the front electric motor 4F, and the process P133 is a process of calculating torque to be generated by the rear electric motor 4R. The processes P132, P133 are performed according to the drive wheel torque calculated in the process P131 and the torque distribution between the front wheels 6F and the rear wheels 6R.

A vehicle model MOD01 is used to calculate the drive wheel torque in the process P131. The vehicle model MOD01 includes an engine model MOD11, a clutch model MOD12, and a transmission model MOD13. An engine virtually implemented by the vehicle model MOD01 will be referred to as "virtual engine," a clutch virtually implemented by the vehicle model MOD01 will be referred to as "virtual clutch," and a transmission virtually implemented by the vehicle model MOD01 will be referred to as "virtual transmission." The engine model MOD11 models the virtual engine. The clutch model MOD12 models the virtual clutch. The transmission model MOD13 models the virtual transmission.

The engine model MOD11 calculates a virtual engine speed and virtual engine torque. The virtual engine speed is calculated from the vehicle speed, the overall reduction ratio, and the slip ratio of the virtual clutch. The virtual engine torque is calculated from the virtual engine speed and the accelerator operation amount. The vehicle speed is acquired from a signal from the vehicle speed sensor 11. The accelerator operation amount is acquired from a signal from the accelerator pedal stroke sensor 12. The overall reduction ratio is a numerical value obtained by multiplying the gear ratio of the virtual transmission by the reduction ratio determined by the mechanical structure from the virtual transmission to the drive wheels. The engine model MOD11 defines the relationship between the virtual engine speed and the virtual engine torque for each accelerator operation amount. The driver may be able to select engine characteristics of the engine model MOD11 through an operation on the HMI 20.

The clutch model MOD12 calculates a torque transfer gain. The torque transfer gain is a gain for calculating the degree of torque transfer of the virtual clutch according to the clutch operation amount. When the stick shift mode with clutch operations is selected as the shift mode, the clutch operation amount is acquired from a signal from the clutch pedal stroke sensor 16. The clutch operation amount is 0% at the start position of the pseudo clutch pedal 26 and is 100% at the end position of the pseudo clutch pedal 26. The clutch model MOD12 gives the torque transfer gain with respect to the clutch operation amount. The torque transfer gain is converted to the clutch torque capacity of the virtual clutch, i.e., the virtual clutch torque capacity. Virtual clutch torque that is input from the virtual clutch to the virtual transmission is calculated based on a comparison between the virtual clutch torque capacity and the virtual engine torque calculated by the engine model MOD11. The clutch model MOD12 calculates the slip ratio by subtracting the torque transfer gain from 1. The slip ratio is used to calculate the virtual engine speed in the engine model MOD11.

When the paddle shift mode is selected as the shift mode, the clutch operation amount to be input to the clutch model MOD12 is calculated using a clutch operation model. When the stick shift mode with no clutch operation is selected as the shift mode, the clutch operation amount to be input to the clutch model MOD12 is calculated using the clutch operation model. The clutch operation model is a model that simulates clutch operations by a model driver. When the paddle shift mode is selected, the vehicle speed, the virtual engine speed, and a signal from the paddle shift switch 15 are input to the clutch operation model. When the stick shift mode with no clutch operation is selected, the vehicle speed, the virtual engine speed, and a signal from the shift position sensor 14 are input to the clutch operation model.

The signal from the paddle shift switch 15 and the signal from the shift position sensor 14 are used to determine the timing of a clutch operation. When a shift operation by the driver is detected based on the signal from the paddle shift switch 15 or the signal from the shift position sensor 14, the clutch operation model maximizes the clutch opening amount to disengage the virtual clutch. The vehicle speed and the virtual engine speed are used to calculate the clutch operation amount. The clutch operation model calculates the clutch operation amount based on the difference between the rotational speed of an input shaft of the virtual transmission calculated from the vehicle speed and the virtual engine speed, so as to smoothly match the rotational speed of the input shaft of the virtual transmission with the virtual engine speed.

The transmission model MOD13 calculates a virtual gear ratio. The virtual gear ratio is a gear ratio determined by the virtual shift position of the virtual transmission. The virtual gear ratio is set for each shift position. The highest virtual gear ratio is set for first gear, followed by second gear, third gear, fourth gear, ... in descending order. In the stick shift mode, the shift positions are in one-to-one correspondence with signals from the shift position sensor 14. In the paddle shift mode, the shift position is shifted up by one gear in response to an upshift signal from the paddle shift switch 15, and the shift position is shifted down by one gear in response to a downshift signal from the paddle shift switch 15. While the number of shift positions of the pseudo H-shifter 24 is physically determined, there is no physical limit on the number of shift positions of the pseudo paddle shifter 25. Therefore, the transmission model MOD13 may be set differently between the stick shift mode and the paddle shift mode so that the number of shift positions in the paddle shift mode is larger than the number of shift positions in the stick shift mode.

The transmission model MOD13 calculates virtual transmission torque using the virtual gear ratio and the virtual clutch torque. The virtual transmission torque is virtual torque that is output from the virtual transmission. The control device 101 controls the inverters 3F, 3R so as to change the output torques of the electric motors 4F, 4R according to the virtual transmission torque. The virtual transmission torque changes discontinuously in response to switching of the virtual gear ratio. Such a discontinuous change in virtual transmission torque causes torque shock in the battery electric vehicle 100, creating a feel of a vehicle with a stepped transmission.

The vehicle model MOD01 calculates the drive wheel torque from the virtual transmission torque and the reduction ratio. The torque distribution between the front wheels 6F and the rear wheels 6R may be fixed, or may be actively or passively varied. The driver may be able to select a four-wheel drive mode or a rear-wheel drive mode. When the four-wheel drive mode is selected as the drive mode, the drive wheel torque is the sum of torques applied to the right and left front wheels 6F and the right and left rear wheels 6R. When the rear-wheel drive mode is selected as the drive mode, the drive wheel torque is the sum of torques applied to the right and left rear wheels 6R.

In the process P132, the torque of the front electric motor 4F (front motor torque) in the manual mode is calculated by multiplying the drive wheel torque calculated in the process P131 by the torque distribution ratio of the front wheels 6F and the reduction ratio from an output shaft of the front electric motor 4F to the front wheels 6F. The control device 101 controls the front inverter 3F so as to cause the front electric motor 4F to generate the front motor torque calculated in the process P132.

In the process P133, the torque of the rear electric motor 4R (rear motor torque) in the manual mode is calculated by multiplying the drive wheel torque calculated in the process P131 by the torque distribution ratio of the rear wheels 6R and the reduction ratio from an output shaft of the rear electric motor 4R to the rear wheels 6R. The control device 101 controls the rear inverter 3R so as to cause the rear electric motor 4R to generate the rear motor torque calculated in the process P133.

The control device 101 may perform sound control in addition to the driving control. The control device 101 that functions as a sound control device can cause the in-vehicle speaker to generate a pseudo engine sound that simulates an engine sound of a conventional internal combustion engine vehicle. The pseudo engine sound is produced so that its sound pressure increases as the virtual engine torque increases and that its frequency increases as the virtual engine speed increases. Playing the pseudo engine sound whose sound pressure and frequency are changed in this manner according to the virtual engine torque and the virtual engine speed can give the driver a feel as if he or she were actually driving a real manual transmission internal combustion engine vehicle.

### 5. Notification to Driver

### 5-1. Overview

The configuration of the battery electric vehicle 100 and the driving control by the control device 101 have been described above. The control device 101 also has a function to notify the driver of approach of an object when the object is approaching the battery electric vehicle 100. The control device 101 can detect approach of an object to the battery electric vehicle 100 based on a signal acquired from the perception sensor 17. A typical example of the obj ect to be detected is a bicycle traveling on the road. Other examples of the object to be detected include other traffic participants such as a pedestrian, a two-wheeled vehicle, and a four-wheeled vehicle. Still other examples of the object to be detected include an animal that has entered the road and road debris. Notifying the driver of approach of an object can prompt the driver to avoid a collision with the object and can thus reduce the risk of an accident etc.

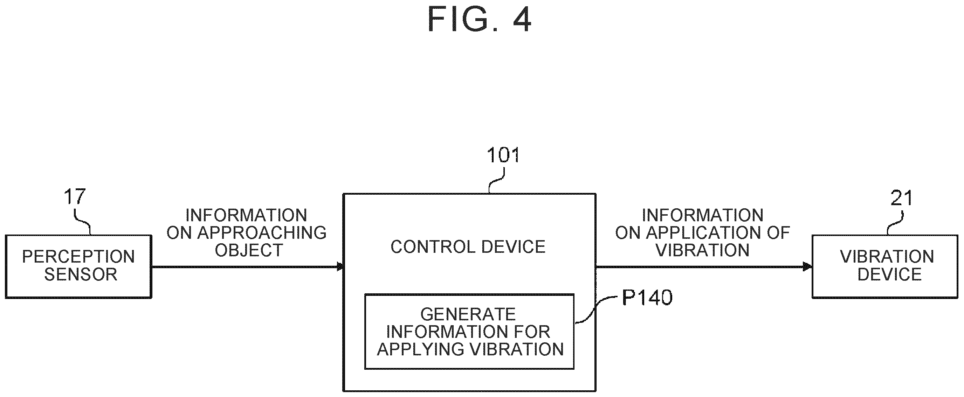

FIG. 4 shows an example of the configuration of the control device 101 related to notification to the driver. The function of the control device 101 shown in FIG. 4 is implemented by the processor 102 executing one or more programs 104 stored in the memory 103.

Information detected by the perception sensor 17 is input to the control device 101. The information detected by the perception sensor 17 includes information on an object approaching the battery electric vehicle 100. The control device 101 performs a process P140 in response to the detection of the object approaching the battery electric vehicle 100. In the process P140, information for applying vibration from the vibration device 21 to the member is generated and sent to the vibration device 21. The vibration device 21 vibrates the member based on the information received from the control device 101.

As described above, notification is given to the driver by vibrating the member in which the vibration device 21 is mounted. However, there is room for consideration as to which member is most suitable as a member in which the vibration device 21 is mounted, that is, as a member to be vibrated for notification.

### 5-2. Comparative Examples

Two comparative examples will be given before describing embodiments. In the first comparative example, the vibration device 21 is mounted in a driver's seat. That is, the seat surface on which the driver is seated is vibrated to notify him or her of approach of an object. This comparative example is disadvantageous in that the driver does not easily notice the notification. That is, the vibration of the seat surface is transmitted to the driver's back and buttocks. However, since the back and buttocks are less sensitive than the hands and feet, the driver relatively not easily notices the vibration. In addition, it is hard to distinguish the vibration of the seat surface from vibration caused by other factors such as vibration transmitted from the road surface when the vehicle travels. For these reasons as well, the driver may not easily notice the notification.

In the second comparative example, the vibration device 21 is mounted in the steering wheel. Notification is given by vibrating the steering wheel. The steering wheel is a member that the driver touches and operates with his or her hands. Therefore, vibrating the steering wheel is effective in that the driver easily notices the notification. However, another issue arises in this case. It is an issue caused by the fact that the steering wheel is a driving operation member that the driver uses for driving. Specifically, when the steering wheel is vibrated, the driver holding the steering wheel may be startled by the vibration and may perform an erroneous operation. If such an erroneous operation occurs, the notification may actually hinder safe driving.

As described above, there is room for consideration as to which member is to be vibrated for notification. Hereinafter, some embodiments of a method for notifying the driver by vibration will be described.

### 5-3. First Embodiment

In a first embodiment, the vibration device 21 is mounted in the pseudo shifting operation member. The pseudo shifting operation member is vibrated to notify the driver of approach of an object.

The pseudo shifting operation member is a member that the driver touches with his or her hand or foot. Compared to the back and buttocks, the hands and feet are more sensitive and therefore more easily feel vibration. Vibrating the pseudo shifting operation member is therefore advantageous over vibrating the seat surface etc. in that the driver more easily notices the notification. The pseudo shifting operation member is a member that is not mounted in ordinary battery electric vehicles. Therefore, the member that the driver does not think would vibrate vibrates, which increases the possibility that the driver will notice the vibration. Approach of an object can thus be effectively notified.

Notification by vibration of the pseudo shifting operation member may be given when the manual mode is selected. When the manual mode is selected, the driver more frequently touches the pseudo shifting operation member. Therefore, the driver more easily notices the notification.

The pseudo shifting operation members are dummy operation members, and the driver's operations input through these members are not essential for driving the battery electric vehicle 100. Therefore, the control device 101 may disable operations input from the pseudo shifting operation members while the pseudo shifting operation member is being vibrated for notification. Even if the pseudo shifting operation member suddenly begins to vibrate and the driver who is touching the pseudo shifting operation member is startled by the vibration and performs an erroneous operation, trouble that is caused by the erroneous operation can be prevented by disabling the inputs.

The vibration device 21 may be mounted in one or two of the following pseudo shifting operation members or may be mounted in all of the following pseudo shifting operation members: the pseudo H-shifter 24, the pseudo paddle shifter 25, and the pseudo clutch pedal 26. However, the vibration device 21 is more effective when mounted in the pseudo H-shifter 24 and the pseudo paddle shifter 25. These members are members that the driver touches with his or her hand. Since the hands can more sensitively feel vibration than the feet, notification can be more effectively given to the driver.

When the vibration device 21 is mounted in the pseudo H-shifter 24 and the pseudo paddle shifter 25, the control device 101 may vibrate both the pseudo H-shifter 24 and the pseudo paddle shifter 25 to notify the driver, or may change the member to be vibrated for notification according to the control mode. Specifically, the pseudo paddle shifter 25 may be vibrated when the shift mode is the paddle shift mode, and the pseudo H-shifter 24 may be vibrated when the shift mode is the stick shift mode.

### 5-4. Process Example

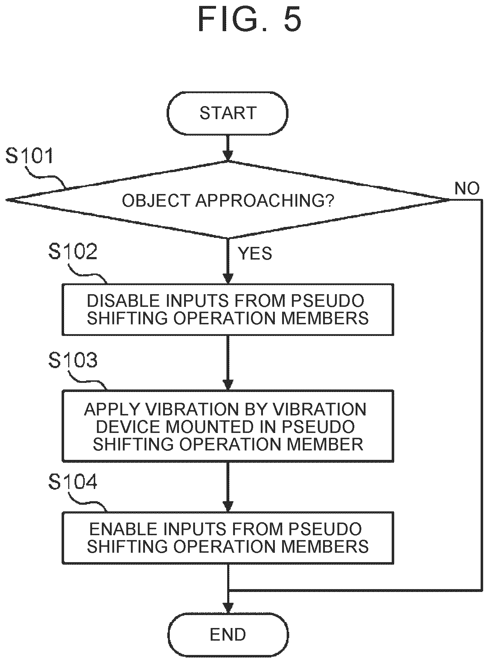

FIG. 5 shows an example of a process in the first embodiment. The process example shown in FIG. 5 is an example in which inputs from the pseudo shifting operation members are disabled during vibration. The series of steps in the process is implemented by the processor 102 executing the program 104.

In step S101, the processor 102 determines whether there is an object approaching the battery electric vehicle 100. The processor 102 can detect an object approaching the battery electric vehicle 100 based on a signal acquired from the perception sensor 17. When there is an object approaching the battery electric vehicle 100 (step S101; Yes), the process proceeds to step S102. When there is no object approaching the battery electric vehicle 100 (step S101; No), the process ends.

In step S102, the processor 102 disables inputs from the pseudo shifting operation members. When inputs are disabled, the process proceeds to step S103.

In step S103, the processor 102 causes the vibration device 21 to vibrate the pseudo shifting operation member to notify the driver. When this vibration notification is given, the process proceeds to step S104.

In step S104, the processor 102 enables inputs from the pseudo shifting operation members that have been disabled in step S102. When inputs are enabled, the process ends.

In the above process example, inputs from the pseudo shifting operation members are disabled during the period from step S102 to step S104. The pseudo shifting operation members are operation members that allow the driver to perform an operation simulating a shifting operation of a manual transmission internal combustion engine vehicle when in the manual mode. Therefore, the driver is unable to shift the virtual shift position during the vibration notification. However, shifting the virtual shift position is not an operation that is necessarily required to drive the battery electric vehicle 100. Therefore, notification can be effectively given without adversely affecting driving of the battery electric vehicle 100.

### 5-5. Second Embodiment

In a second embodiment, the vibration device 21 is mounted in an interior member, and the control device 101 vibrates the interior member to notify the driver. The interior member is a member that is used for the interior of the battery electric vehicle 100, such as a floor, a dashboard, a ceiling, or a door panel.

The interior member has a larger surface area than the driver's seat or the steering wheel. Therefore, when vibration is applied to the interior member, the interior member vibrates with a large amplitude. Since the amplitude is large, the driver can visually perceive the vibration of the interior member, so that the driver easily notices the notification. When the amplitude is large, noise associated with the vibration also tends to be generated. In this case, the driver is also able to audibly perceive the vibration, so that the driver easily notices the notification.

The second embodiment can also be combined with the first embodiment. In other words, the vibration device 21 may be mounted in both the pseudo shifting operation member and the interior member. The control device 101 may notify the driver by vibrating both the pseudo shifting operation member and the interior member. Alternatively, the control device 101 may notify the driver by vibrating the pseudo shifting operation member when the manual mode is selected, and may notify the driver by vibrating the interior member when the automatic mode is selected. Alternatively, the control device 101 may vibrate the pseudo shifting operation member when the driver is touching the pseudo shifting operation member, and may vibrate the interior member when the driver is not touching the pseudo shifting operation member. In this case, for example, a contact sensor is mounted in the pseudo shifting operation member, and whether the driver is touching the pseudo shifting operation member is determined based on a signal acquired from the contact sensor.

### 5-6. Process Example

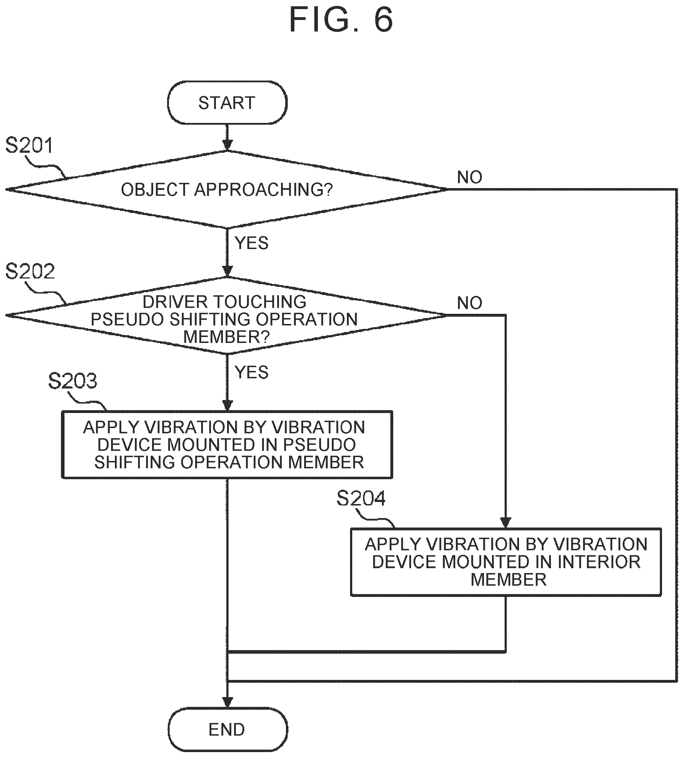

FIG. 6 shows an example of a process in the second embodiment. The process example shown in FIG. 6 is an example in which notification is given by vibrating either the pseudo shifting operation member or the interior member. The series of steps in the process is implemented by the processor 102 executing the program 104.

In step S201, the processor 102 determines whether there is an object approaching the battery electric vehicle 100. The processor 102 can detect an object approaching the battery electric vehicle 100 based on a signal acquired from the perception sensor 17. When there is an object approaching the battery electric vehicle 100 (step S201; Yes), the process proceeds to step S202. When there is no object approaching the battery electric vehicle 100 (step S201; No), the process ends.

In step S202, the processor 102 determines whether the driver is touching the pseudo shifting operation member. Whether the driver is touching the pseudo shifting operation member is determined based on a signal acquired from the contact sensor mounted in the pseudo shifting operation member. When the driver is touching the pseudo shifting operation member (step S202; Yes), the process proceeds to step S203. When the driver is not touching the pseudo shifting operation member (step S202; No), the process proceeds to step S204.

In step S203, the processor 102 causes the vibration device 21 to vibrate the pseudo shifting operation member to notify the driver. When this vibration notification is given, the process ends.

In step S204, the processor 102 causes the vibration device 21 to vibrate the interior member to notify the driver. When this vibration notification is given, the process ends.

In the above process, the pseudo shifting operation member or the interior member is vibrated to notify the driver. Vibrating the pseudo shifting operation member or the interior member is effective in that the driver easily notices the notification as described above. The interior member is vibrated at least when the driver is not touching the pseudo shifting operation member. This can reduce the possibility of the driver being late in noticing the notification because he or she is not touching the pseudo shifting operation member. Notification can thus be effectively given to the driver.

### 5-7. Third Embodiment

A third embodiment is combined with either or both of the first embodiment and the second embodiment. In the third embodiment, the control device 101 causes the vibration device 21 to vibrate the member to notify the driver, and also automatically controls steering of the battery electric vehicle 100 to steer the battery electric vehicle 100 in a direction that avoids an approaching object. This reduces the risk of collision even if the driver is late in noticing the notification. Since the driver is notified, he or she is less likely to feel uneasy about the battery electric vehicle 100 being steered automatically.

In this case, the control device 101 may also play a voice on the in-vehicle speaker to inform the driver that an object is approaching or that steering control will be performed to avoid a collision. The voice that is played may be a predetermined message or may be generated by AI. Since notification is given by voice in addition to vibration, the driver is less likely to feel uneasy about automatic steering.

## Claims

1. A battery electric vehicle (100) that includes an electric motor (4F, 4R) as a driving source, the battery electric vehicle (100) comprising:
a driving operation member (22, 23) that is used to drive the battery electric vehicle (100);
a pseudo shifting operation member (24, 25, 26) imitating an operation member that is used to perform a shifting operation of a manual transmission internal combustion engine vehicle;
a control device (101) configured to control the battery electric vehicle (100) according to an operation of the driving operation member (22, 23); and
a perception sensor (17) configured to detect an object approaching the battery electric vehicle (100), wherein:
the control device (101) is configured to
detect the object approaching the battery electric vehicle (100) via the perception sensor (17),
execute, according to selection by a driver, a control mode in which an operation of the pseudo shifting operation member (24, 25, 26) is associated with torque of the electric motor (4F, 4R), and
give notification to the driver by vibrating any member provided in a cabin of the battery electric vehicle (100), in a case where the object approaching the battery electric vehicle (100) is detected; and
the notification that is given to the driver during execution of the control mode includes notifying the driver by vibrating the pseudo shifting operation member (24, 25, 26).

2. The battery electric vehicle (100) according to claim 1, wherein:
the driving operation member (22, 23) includes an accelerator pedal (22); and
the pseudo shifting operation member (24, 25, 26) includes
a pseudo H-shifter (24) imitating an H-shifter of a manual transmission, and
a pseudo clutch operation device (26) imitating a clutch operation device.

3. The battery electric vehicle (100) according to claim 2, wherein:
the control device (101) is configured to, when in the control mode, change the torque of the electric motor (4F, 4R) according to a shift position selected by the pseudo H-shifter (24), an amount of operation of the pseudo clutch operation device (26), and an amount of operation of the accelerator pedal (22); and
the notification that is given to the driver during the execution of the control mode is given by vibrating at least one of the pseudo H-shifter (24) and the pseudo clutch operation device (26).

4. The battery electric vehicle (100) according to claim 1, wherein:
the driving operation member (22, 23) includes an accelerator pedal (22); and
the pseudo shifting operation member (24, 25, 26) includes a pseudo sequential shifter (25) imitating a sequential shifter of a manual transmission.

5. The battery electric vehicle (100) according to claim 4, wherein:
the control device (101) is configured to, when in the control mode, change the torque of the electric motor (4F, 4R) according to a shift position selected by the pseudo sequential shifter (25) and an amount of operation of the accelerator pedal (22); and
the notification that is given to the driver during the execution of the control mode is provided by vibrating the pseudo sequential shifter (25).

6. The battery electric vehicle (100) according to claim 1, wherein:
the driving operation member (22, 23) includes an accelerator pedal (22); and
the pseudo shifting operation member (24, 25, 26) includes a pseudo H-shifter (24) imitating an H-shifter of a manual transmission.

7. The battery electric vehicle (100) according to claim 6, wherein:
the control device (101) is configured to, when in the control mode, change the torque of the electric motor (4F, 4R) according to a shift position selected by the pseudo H-shifter (24) and an amount of operation of the accelerator pedal (22); and
the notification that is given to the driver during the execution of the control mode is given by vibrating the pseudo H-shifter (24).

8. The battery electric vehicle (100) according to any one of claims 1 to 7, wherein the control device (101) is configured to disable inputs from the pseudo shifting operation member (24, 25, 26) while giving the notification to the driver by vibrating the pseudo shifting operation member (24, 25, 26).

9. The battery electric vehicle (100) according to any one of claims 1 to 7, wherein the notification that is given to the driver during the execution of the control mode is given by vibrating the pseudo shifting operation member (24, 25, 26) and an interior member that is used for interior of the battery electric vehicle (100).

10. The battery electric vehicle (100) according to any one of claims 1 to 7, wherein:
the pseudo shifting operation member (24, 25, 26) includes a contact sensor configured to detect contact by the driver; and
the notification that is given to the driver during the execution of the control mode is given by
vibrating the pseudo shifting operation member (24, 25, 26), in a case where the contact sensor detects the driver touching the pseudo shifting operation member (24, 25, 26), and
vibrating an interior member that is used for interior of the battery electric vehicle (100), in a case where the contact sensor does not detect the driver touching the pseudo shifting operation member (24, 25, 26).

11. A battery electric vehicle (100) that includes an electric motor (4F, 4R) as a driving source, the battery electric vehicle (100) comprising:
a driving operation member (22, 23) that is used to drive the battery electric vehicle (100);
a pseudo shifting operation member (24, 25, 26) imitating an operation member that is used to perform a shifting operation of a manual transmission internal combustion engine vehicle;
a control device (101) configured to control the battery electric vehicle (100) according to an operation of the driving operation member (22, 23); and
a perception sensor (17) configured to detect an object approaching the battery electric vehicle (100), wherein:
the control device (101) is configured to
detect the object approaching the battery electric vehicle (100) via the perception sensor (17),
execute, according to selection by a driver, a control mode in which an operation of the pseudo shifting operation member (24, 25, 26) is associated with torque of the electric motor (4F, 4R), and
give notification to the driver by vibrating any member provided in a cabin of the battery electric vehicle (100), in a case where the object approaching the battery electric vehicle (100) is detected; and
the notification that is given to the driver during execution of the control mode includes notifying the driver by vibrating an interior member that is used for interior of the battery electric vehicle (100).
